# EUROPÄISCHE PATENTSCHRIFT

(11) **EP 1 536 965 B1**
(45) Veröffentlichungstag und Bekanntmachung des Hinweises auf die Patenterteilung: **13.09.2006**
(21) Anmeldenummer: 04741059.2
(22) Anmeldetag: 15.07.2004
(51) Int. Cl.: B60J 10/00, B60J 10/10

(54) **DICHTUNGS- UND/ODER VERRIEGELUNGSSYSTEM FÜR FAHRZEUGE MIT EINER AUFBAUSEITIGEN FAHRZEUGÖFFNUNG**
SEALING AND/OR LOCKING SYSTEM FOR VEHICLES HAVING AN OPENING ON THE BODY SIDE
SYSTEME D'ETANCHEITE ET/OU DE VERROUILLAGE DESTINE A UN VEHICULE DONT LA CARROSSERIE PRESENTE UNE OUVERTURE

(30) Priorität: 01.08.2003 DE 10335999; 29.10.2003 DE 20316690 U
(43) Veröffentlichungstag der Anmeldung: 08.06.2005
(73) Patentinhaber: CTS Fahrzeug-Dachsysteme GmbH, 74321 Bietigheim-Bissingen (DE)
(72) Erfinder: KLEIN, Berthold, 71277 Rutesheim (DE); RAISCH, Dieter, 71277 Rutesheim (DE); WEZYK, Wojciech, 71065 Sindelfingen (DE)
(74) Vertreter: Müller, Gottfried
(86) Internationale Anmeldenummer: PCT/EP2004/007887
(87) Internationale Veröffentlichungsnummer: WO 2005/012020

(56) Entgegenhaltungen:
- DE-C- 19 701 681
- US-A- 3 110 065

## Beschreibung

Die Erfindung betrifft ein Dichtungs- und/oder Verriegelungssystem für Fahrzeuge mit einer aufbauseitigen Fahrzeugöffnung, insbesondere einer Dach- oder Türöffnung, gemäß dem Oberbegriff des Anspruches 1.

Ein derartiges Dichtungs- und/oder Verriegelungssystem wird im DE 197 01 681 C offenbart.

Fahrzeuge der vorgenannten Art sind aus der DE-PS 1 236 953 bekannt, die als Abdeckung einer Türöffnung eine Tür vorsieht, die gegenüber dem Türrahmen als angrenzendem Bauteil über eine Türdichtung abzudichten und zu verriegeln ist. Die Türdichtung ist als innendruckabhängig querschnittsveränderliches, elastisches Formschlusshohlprofil ausgebildet, das an eine Druckquelle anzuschließen ist und das über einen Grundkörper in einer als Halterung dienenden Aufnahmenut der Tür fixiert ist. Bezogen auf die Abdecklage für die Fahrzeugöffnung, also die geschlossene Tür, ist der türseitigen Halterung im Türrahmen als angrenzendem, karosseriefestem Bauteil eine Rinne zugeordnet, die für die mit Innendruck beaufschlagte Türdichtung als Formschlusshohlelement eine Aufnahme bildet, so dass sich durch wechselseitigen Eingriff in Abdeckung und angrenzendes Bauteil, also in Tür und Türrahmen, über die Dichtung zusätzlich zur Abdichtung eine Formschlussverbindung ergibt.

In einer weiteren Ausführungsform ist die Türdichtung mit einer türseitigen Dichtlippe und einem Hohlkammerprofil ausgebildet. Das Hohlkammerprofil ist druckabhängig ziehharmonikaartig ausschwenkbar und hintergreift bei geschlossener Tür einen in die Türöffnung vorspringenden Rastschenkel des Türrahmens als angrenzendes Bauteil, an den sich von der Gegenseite die Dichtlippe anlegt.

Des Weiteren ist aus der DE-AS 1 430 936 eine Vorrichtung zum Abdichten von Fahrzeugtüren bekannt, bei der die Tür als Abdeckung für eine Türöffnung in der Schließlage über die Türdichtung gegen den Türrahmen als angrenzendes Bauteil verspannt ist. Der Türrahmen ist bei dieser Lösung mit einer rinnenförmigen Aufnahme versehen, in der die als Formschlusshohlelement ausgebildete Türdichtung über einen außenseitig angesetzten Grundkörper gehalten ist. Die schlauchartige Türdichtung ist an eine Druckquelle angeschlossen und zur Verspannung der Tür im Türrahmen druckbeaufschlagt. Durch Anlegen von Unterdruck wird die im Türrahmen befestigte Türdichtung zusammengezogen und gibt damit die Tür frei, so dass diese geöffnet werden kann.

In ähnlicher Weise arbeitet auch eine aus der US-PS 2 104 144 bekannte Lösung, die die Abdichtung und Verriegelung einer Flugzeugtür betrifft, welche geschlossen die in der Außenhaut des Flugzeuges vorgesehene Türöffnung überdeckt. Tür und Türrahmen sind in ihren bei geschlossener Tür aneinander grenzenden Wandflächen umlaufend mit korrespondierenden Vertiefungen versehen, die sich zu einem Hohlprofil ergänzen, in dem als Formschlusshohlelement ein Dichtschlauch liegt, der in Abhängigkeit vom Innendruck als Beaufschlagungsdruck, bei den Atmosphärendruck übersteigendem Innendruck, durch wechselseitigen Eingriff in die Vertiefungen die Tür in ihrer Schließlage fixiert bzw. bei Atmosphärendruck oder darunter liegendem Innendruck soweit in die rahmenseitige Vertiefung zurückweicht oder zurückgedrängt werden kann, dass die Tür geöffnet werden kann.

Der Erfindung liegt die Aufgabe zugrunde, ein Dichtungs- und/oder Verriegelungssystem der eingangs genannten Art dahingehend auszugestalten, dass dieses insbesondere auch für dachseitigen Fahrzeugöffnungen zugeordnete Abdeckungen in Form von soft- oder Hardtops, vor allem aber für Hardtops, und die Abdichtung und/oder Verriegelung der einzelnen Dachelemente untereinander sowie auch gegenüber den endseitigen Karosserieelementen, geeignet ist.

Gemäß der Erfindung wird dies mit den Merkmalen des Anspruches 1 erreicht, durch die ungeachtet der Querschnittsveränderlichkeit und der Flexibilität, insbesondere der Elastizität des Formschlusshohlelementes eine schützende, aussteifende und/oder justierende Dichtungs- und/oder Verriegelungsverbindung zwischen Abdeckung und angrenzendem Bauteil zu erreichen ist, wobei diese Verbindung zugleich so gestaltet ist, dass sie beim Zusammenfahren von Abdeckung und angrenzendem Bauteil eine Einfädelhilfe bietet und in zusammengefahrendem Zustand als Eingriffs- und Zugriffsschutz wirken kann, wobei im Rahmen der erfindungsgemäßen Lösung insbesondere auch Ausgestaltungen liegen, die für das Formschlusshohlelement als solches, das innendruckabhängig arbeitet, eine schützende Abschirmung schaffen.

Im Rahmen der Erfindung liegen Ausgestaltungen, die eine punktuelle Verriegelung ermöglichen, wie auch Lösungen, die linear bzw. linear flächig dichtend und/oder verriegelnd wirken.

Die Überbrückungsteile mit Aussteifungs-, Schutz- und/oder Führungsfunktion können im Rahmen der Erfindung als Stützen und/oder Stege gestaltet sein, stegförmig insbesondere in Verbindung mit linearen Dicht- und/oder Verriegelungssystemen, wie sie beispielsweise zwischen aufeinander folgenden Hardtop-Dachteilen für Fahrzeuge oder auch im Anschluss eines vorderen Dachteiles eines öffnungsfähigen Daches gegen die Karosserie, insbesondere gegen den Windlauf der Karosserie zweckmäßig sind.

Durch die Verbindung des Überbrückungsteiles zum Grundkörper wird ein Traggerüst geschaffen, das bevorzugt zwar flexibel, aber nicht labil ist und das seinerseits zumindest bezüglich seines Überbrückungsteiles im Wesentlichen innerhalb des Formschlusshohlelementes liegen kann oder auch einen Wandungsteil des Formschlusshohlelementes bilden kann.

So kann im Rahmen der Erfindung, bevorzugt für punktuelle, insbesondere Verriegelungsfunktion aufweisende Lösungen, das Überbrückungsteil als Stütze ausgebildet sein, die im Wesentlichen von Formschlusshohlelementen umschlossen ist, so dass sich bei Innendruckbeaufschlagung des Formschlusshohlelementes eine ballonartige Aufweitung desselben ergibt, die, in eine entsprechende Aufnahme des angrenzenden Bauteiles eingreifend, zu Verriegelungs- und Verspannungszwecken zu nutzen ist. Dabei kann das ballonartige Formschlusselement an der Basis angreifen und im Hinblick auf eine pilzartige Aufweitung bevorzugt mit dem von der Basis abgelegenen, frei auslaufenden Ende der Stütze verbunden sein, wobei es sich im Rahmen der Erfindung auch als zweckmäßig erweist, die Stütze ihrerseits als Führungskanal zu gestalten, über den entsprechende Verbindungen zur jeweiligen Druckquelle laufen. Bei flächiger, insbesondere stegartiger Ausbildung der Stütze kann diese auch dazu genutzt werden, das ballonartige Formschlusshohlelement in zwei Kammern zu unterteilen und zusätzlich in Erstreckungsrichtung des Steges auszusteifen.

Eine solche Ausgestaltung, die in Verbindung mit einem zentralen stützenartigen Aussteifungskörper als Überbrückungsteil zu einem pilzartigen Spann- und Verriegelungselement führt, ist im Rahmen der Erfindung bei gleichem Grundaufbau auch mit einem langgestreckten stegartigen Aussteifungskörper als Uberbrückungsteil zu realisieren und bildet dann, in Abhängigkeit von der Länge des Steges, ein lineares Dichtungs- und/oder Verriegelungselement mit einander gegenüberliegenden Kammern, die bezüglich der Druckquelle miteinander in Verbindung stehen können oder denen auch eine getrennte Versorgung zugeordnet sein kann.

Abweichend von einer Gestaltung des Verriegelungselementes, bei dem der stegartige Aussteifungskörper als Überbrückungsteil zwischen den Kammern quasi in einer Symmetrieebene liegt, kann auch ein asymmetrischer Aufbau des Überbrückungsteiles vorgesehen sein, bei dem lediglich eine Kammer gegeben ist. In dieser Ausgestaltung bildet das Überbrückungsteil als Trag- und Stützwand gleichzeitig eine außenseitige Kammerwandung und kann beispielsweise, der Außenseite des Daches zugewandt, auch eine schützende Spaltüberdeckung bilden, wozu es auch zweckmäßig sein kann, das Überbrückungsteil entsprechend zu armieren, sei es durch entsprechende Fasereinlagen und/oder "Beschichtungen", so z. B. durch Armierungen in Netzform, wobei Draht- oder Gewebenetze in Frage kommen.

Im Rahmen der Erfindung liegt es auch, und dies insbesondere in Verbindung mit stegartigen Ausbildungen des Überbrückungsteiles und einem linearen Verlauf des Formschlusshohlelementes, das unter Druck Schlauchform einnimmt, das Überbrückungsteil geschlitzt auszubilden, so dass es einen Übergangsteil mit Schenkeln bildet, an die der entsprechend geschlitzte Schlauch mit seinen Schlitzrändern anschließt, wobei sich die Schenkel des Übergangsteiles bevorzugt mit zunehmendem Wandquerschnitt bis in den Grundkörper erstrecken und quasi Verlängerungen der Schlauchschenkel bildet.

Insbesondere bei einer derartigen Lösung können Formschlusshohlelement, Übergangsteil und auch Teile des Grundkörpers eine Begrenzung eines Hohlraumes bilden, und eine Druckbeaufschlagung dieses Hohlraumes führt dann sowohl bezüglich des Grundkörpers wie auch des Hohlelementes zu einer durch den Innendruck bedingten, verbesserten Formschlussverbindung zur Abdeckung bzw. zum angrenzenden Bauteil, wobei bevorzugt durch die Materialelastizität eine Grundform vorgegeben ist, bei der das Formschlusshohlelement und auch der anschließende, das Uberbrückungsteil bildende Übergangsteil mit ihren einander gegenüberliegenden Wandteilen bei Unterdruck sich aufeinander zubewegen und gegebenenfalls aneinander anlegen, so dass ein schlanker Auslauf gewährleistet ist, der das Einfädeln in eine entsprechend hinterschnitten ausgebildete Aufnahme erleichtert.

Das Übergangsteil, das bei dieser Ausgestaltung je nach Betrachtungsweise durch im Querschnitt verstärkte Abschnitte der Schenkel des Formschlusselementes oder durch sich verjüngende Wandteile des Grundkörpers gebildet sein kann, bildet eine Spaltüberdeckung, die einerseits hinreichende Flexibilität gewährleistet, andererseits aber auch hinreichenden Schutz, wobei im Gegenzug zur Überdruckbeaufschlagung des von Grundkörper, Übergangsteil und Formschlusselement begrenzten Hohlraumes auch eine Unterdruckbeaufschlagung desselben vorgesehen sein kann, die zu einer Verschlankung führt, welche das Zusammenführen von Abdeckung und angrenzendem Bauteil erleichtert.

Weitere Einzelheiten und Merkmale der Erfindung ergeben sich aus den Unteransprüchen. Ferner wird die Erfindung nachstehend anhand von Ausführungsbeispielen mit weiteren Details erläutert. Es zeigen:
- Fig. 1: bezogen auf einen Personenkraftwagen mit offenem Aufbau ein dessen Innenraum überdeckendes Dach in Hard-top-Ausführung mit drei in Fahrzeuglängsrichtung aneinander anschließenden Dachteilen und schematisierter Andeutung des Dichtungs- und Verriegelungssystemes, über das die Dachteile bei geschlossenem Dach untereinander verbunden sind und in Fahrzeuglängsrichtung an die Karosserie anschließen, in vereinfachter perspektivischer Darstellung,
- Fig. 2: eine schematisierte Darstellung eines Hardtops gemäß Fig. 1 in Seitenansicht, bei schematisierter Darstellung der Steuer- und Versorgungseinrichtung für das Dichtungs- und/oder Verriegelungssystem,
- Fig. 3 und 4: in einander entsprechenden, schematisierten Schnittdarstellungen den vorderen Abschnitt des vorderen Dachteils bei dessen Annäherung an den Windlauf des Fahrzeuges, mit dem in der Darstellung gemäß Fig. 4 der vordere Dachteil verriegelnd und dichtend verbunden ist,
- Fig. 5 und 6: in Analogie zu den Darstellungen gemäß Fig. 3 und 4 den rückwärtigen Bereich des vorderen Dachteils in der Annäherungsphase zum mittleren Dachteil, wobei vorderer und mittlerer Dachteil in Hochrichtung aufeinander zulaufen und wobei dem vorderen Dachteil ein Formschlusshohlelement zugeordnet ist, das, wie in Fig. 6 gezeigt, in eine Aufnahme des hinteren Dachteiles einfährt, wobei Fig. 5 und 6 das Formschlusshohlelement jeweils im kontrahierten Zustand zeigen,
- Fig. 7 und 8: den Fig. 5 und 6 entsprechende Darstellungen, bei denen am hinteren Dachteil das Formschlusshohlelement angeordnet ist, das in eine Aufnahme des mittleren Dachteiles einzuführen ist und das bei Innendruckbeaufschlagung dichtend und verriegelnd zur Aufnahme festgelegt ist. Ferner zeigt
- Fig. 9: bezogen auf die Verbindung des mittleren Dachteils zum hinteren Dachteil gemäß Fig. 7 und 8 den dichtenden und verriegelnden Eingriff des Innendruck beaufschlagten Formschlusshohlelementes in die dem mittleren Dachteil zugeordnete Aufnahme,
- Fig. 10: den rückwärtigen Bereich des hinteren Dachteiles in seiner Verriegelungsstellung gegenüber dem Fahrzeugaufbau durch Eingriff des dem hinteren Dachteil zugeordneten Formschlusshohlelementes in eine Aufnahme der Hutablage oder eines Rohbauteiles der Karosserie des Fahrzeuges,
- Fig. 11: eine weiter vereinfachte schematisierte Darstellung des Hardtops, ähnlich Fig. 2, wobei die Dachteile des Hardtops dichtend und verriegelnd über Formschlusshohlelemente miteinander verbunden sind, die in Längsrichtung des Daches, den Spalt zwischen aufeinander folgenden Dachteilen überbrückend, sich erstrecken und die unter Innendruckbeaufschlagung die Dachteile gegeneinander verriegeln, wobei in
- Fig. 12 und 13: die Situation beim Zusammenfahren aufeinander folgender Dachteile und nach Verriegeln der Dachteile gegeneinander dargestellt ist.
- Fig. 14: zeigt eine vergrößerte Darstellung des aufeinander folgende Dachteile verriegelnden Formschlusshohlelementes,
- Fig. 15 und 16: in Gegenüberstellung Lösungen, bei denen aufeinander folgende Dachteile, die gegeneinander höhenbeweglich sind, über Formschlusshohlelemente gegeneinander verriegelt sind, wobei in Fig. 15 eine Einkammerlösung und in Fig. 16 eine Zweikammerlösung gezeigt ist, und
- Fig. 17: eine separierte Darstellung, stark schematisiert, eines Formschlusshohlelementes in einer weiteren erfindungsgemäßen Ausgestaltung.

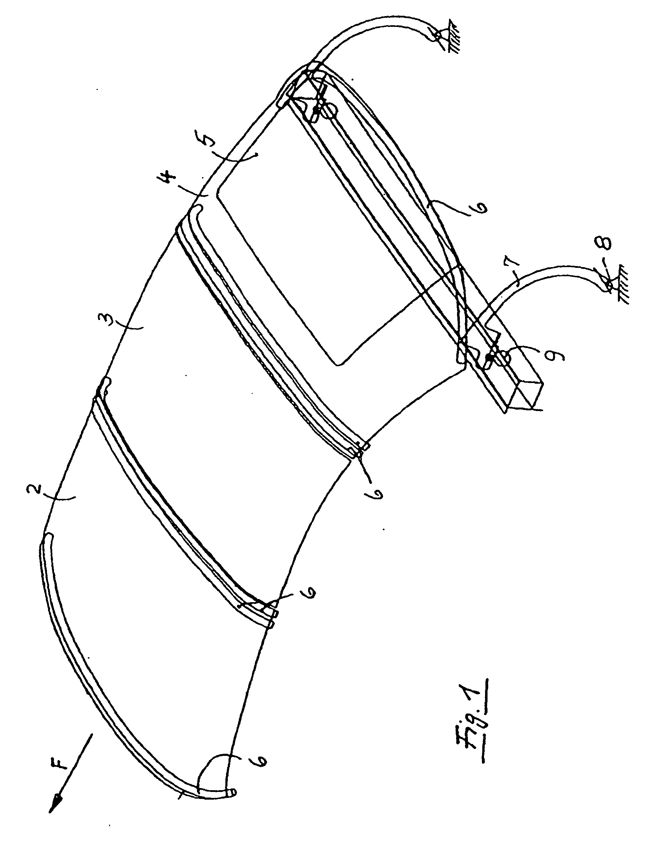

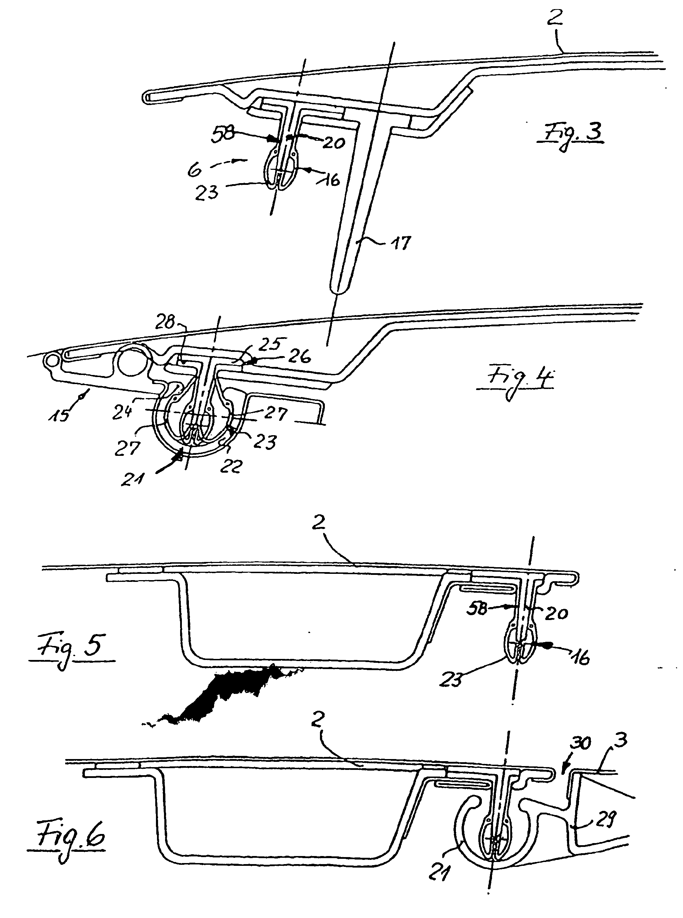

In Fig. 1 ist isoliert das Dach 1 eines ansonsten im Wesentlichen nicht gezeigten Personenkraftwagens mit offener Karosserie dargestellt. Das Dach 1 ist als Hardtop ausgebildet und umfasst - als Teile der Dachabdeckung - drei Dachteile 2, 3, 4, die in sich formsteif sind und von denen der Dachteil 2 einen bezogen auf die Fahrtrichtung F vorderen Dachteil bildet, der, wie in Fig. 4 veranschaulicht, an den über der Windschutzscheibe des Fahrzeuges verlaufenden Windlauf 15 anschließt. Der hintere Dachteil 4 umfasst eine Heckscheibe 5 und schließt, bezogen auf die Fahrtrichtung F, im Bereich des Übergangs auf den heckseitigen Karosserieabschluss des Fahrzeuges, der beispielsweise durch einen Kofferraumdeckel gebildet sein kann, an den Aufbau an, wobei der Anschluss, wie in Fig. 10 gezeigt, gegen eine Hutablage 34 oder auch ein Rohbauteil der Karosserie erfolgen kann.

Im Übergang zwischen den Dachteilen 2, 3 und 4 sowie auch im Anschluss des vorderen Dachteiles 2 gegen den Windlauf 15 und des hinteren Dachteiles 4 zum heckseitigen Karosserieabschluss sind jeweils Verriegelungselemente, allgemein mit 6 bezeichnet, vorgesehen, denen bevorzugt auch Dichtfunktion zukommt und die durch langgestreckte, innendruckabhängige querschnittsveränderliche und elastische Formschlusshohlelemente 16; 18; 19 gebildet sind.

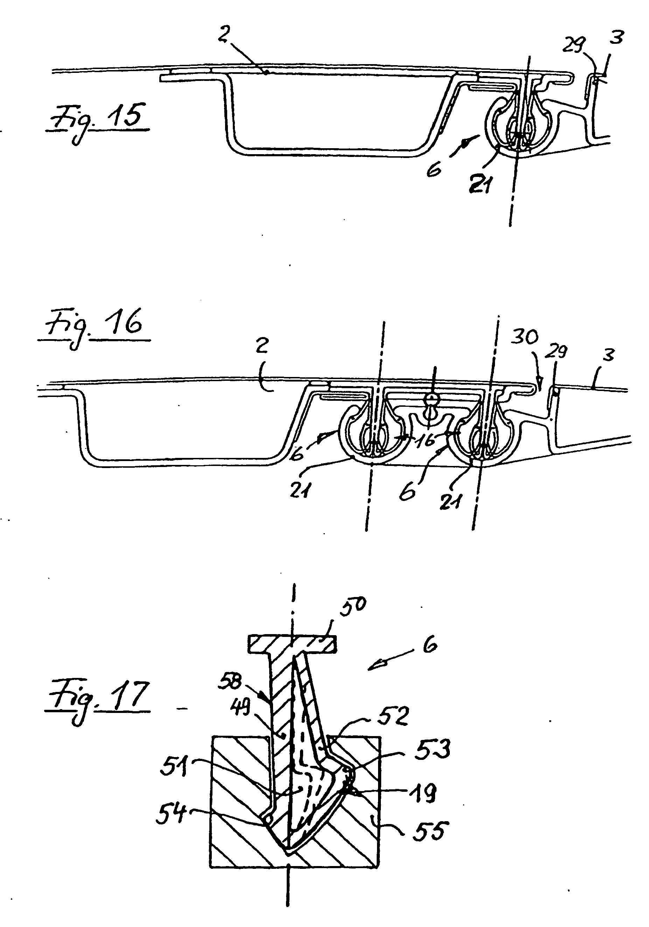

Fig. 1 veranschaulicht, stark schematisiert, bezüglich der Verstellkinematik für das Dach 1 lediglich am hinteren Dachteil 4 angreifende Lenker 7, von denen je einer einer Fahrzeuglängsseite zugeordnet und deren Anlenkung zur Karosserie bei 8 schematisch angedeutet ist. Zur Verstellbarkeit der Dachteile 2 bis 4 gegeneinander sind viele Lösungen bekannt, auf die fallweise zurückgegriffen werden kann. Entsprechendes gilt auch bezüglich der Verstellbarkeit des Daches 1 insgesamt, so dass die hier veranschaulichte Anlenkung über die Lenker 7 nur als ein Beispiel gedacht ist, und dies in Verbindung mit einer Verriegelung der Lenker 7 in ihrer der geschlossenen Lage des Daches 1 entsprechenden Stellung über Verriegelungselemente 9, in als kugelige Formschlusshohlelemente ausgebildet sind. Bezüglich der Verriegelungselemente 6 sind in der Darstellung gemäß Fig. 1 für die zwischen dem mittleren Dachteil 3 und dem vorderen Dachteil 2 sowie dem hinteren Dachteil 4 liegenden Verriegelungselemente 6 Doppelanordnungen gezeigt, wie sie in Fig. 16 veranschaulicht sind; im Rahmen der Erfindung liegt es aber selbstverständlich auch, im Anschluss der Dachteile 2 bis 4 jeweils nur ein Verriegelungselement 6 vorzusehen, analog der Darstellung in Fig. 15.

Bezogen auf die Darstellung gemäß Fig. 1 zeigt Fig. 2 eine Anordnung für die Druckversorgung der Verriegelungselemente 6 bzw. 9, wobei im Ausführungsbeispiel eine pneumatische Druckversorgung vorgesehen ist, grundsätzlich aber auch andere Fluide verwendet werden können. Mit 10 ist der als Druckquelle eingesetzte Kompressor bezeichnet, dem ein Vorratsbehälter 11 nachgeschaltet ist, von dem aus über nur symbolisch angedeutete Ventile 12 die Druckversorgung und Entlüftung der als Verriegelungselemente 6 bzw. 9 verwendeten Formschlusshohlelemente erfolgt. Die Ventile 12 können in einfacher Weise als 2/2-Wegeventile ausgebildet sein, denen strichpunktiert dargestellte Steuerleitungen 13 zugeordnet sind, und die gemeinsam, beispielsweise über einen Schalter 14 ansteuerbar sind. Selbstverständlich liegt es im Rahmen der Erfindung, die Verriegelungselemente 6 und 9 derart anzusteuern, dass die Verriegelungen zwischen den einzelnen Dachteilen und/oder zur Karosserie individuell erfolgen bzw. freigegeben werden.

Die Fig. 3 und 4 veranschaulichen die Ausgestaltung einer Verriegelung zwischen dem vorderen Dachteil 3 und dem karosserieseitigen, oberhalb der Windschutzscheibe verlaufenden Windlauf 15, wobei Fig. 3 als Verriegelungselement 6 ein Formschlusshohlelement 16 in seinem entlüfteten Zustand zeigt. Ergänzend zum Verriegelungselement 6 ist in dieser Ausgestaltung noch ein Führungszapfen 17 vorgesehen, dem im Windlauf 15, was Fig. 4 nicht zeigt, eine entsprechende passende Aufnahme zur Justierung zugeordnet ist.

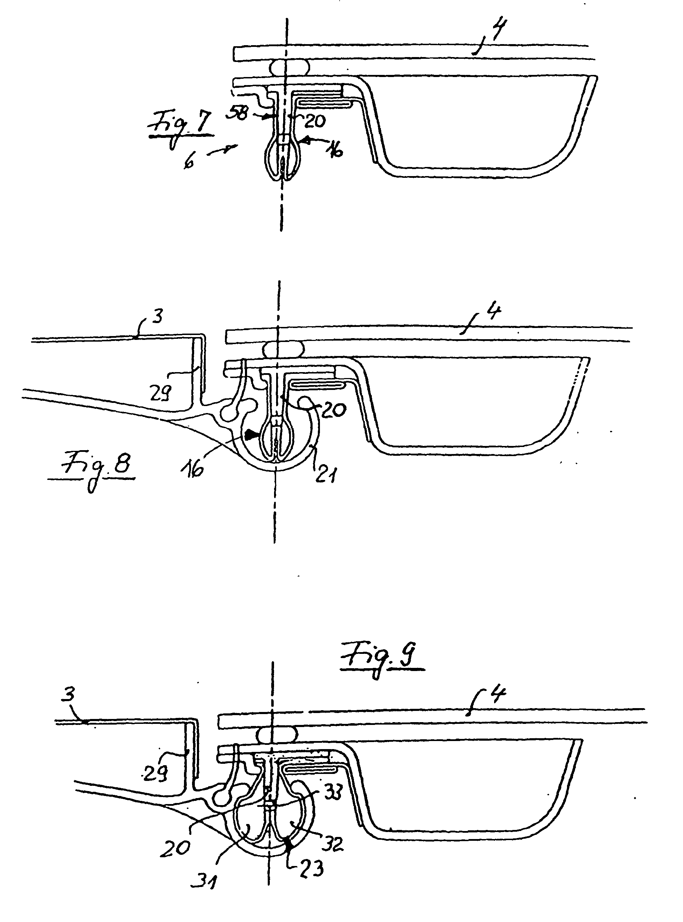

Grundsätzlich liegt es aber auch im Rahmen der Erfindung, die Ausrichtung und Justierung durch die Formschlusshohlelemente 16 selbst zu realisieren, wobei diese auch in den in den Fig. 4 bis 10 veranschaulichten Anwendungsfällen eine Ausgestaltung aufweisen können, wie sie anhand der Fig. 11 bis 14 sowie anhand der Fig. 17 veranschaulicht ist.

Insbesondere geeignet zur Übernahme einer Führungsfunktion und als Einfädelhilfe sind Ausgestaltungen, wie sie in den Fig. 11 bis 14 für als Verriegelungselemente eingesetzte Formschlusshohlelemente 18 und in Fig. 17 für Formschlusshohlelemente 19 gezeigt sind, wobei in dieser Art ausgestaltete Formschlusshohlelemente 18, 19 insbesondere auch für einen spaltüberbrückenden Einsatz geeignet sind, wie in Fig. 11 veranschaulicht, wobei diese Formschlusshohlelemente 18, 19 im den Spalt überbrückenden Bereich verstärkt, gegebenenfalls auch armiert ausgebildet sein können und dadurch auch eine Absicherung gegen gewaltsames Eindringen bilden können.

Grundsätzlich können Formschlusshohlelemente gemäß der Erfindung sowohl als punktuelle Verriegelungselemente, zum Beispiel bei kugeliger Grundform, oder auch als lineare Verriegelungs- und/oder Dichtelemente eingesetzt werden, wie die Darstellungen gemäß Fig. 3 bis 14 veranschaulichen, wobei abweichend von den gezeigten langgestreckten Ausgestaltungen der Formschlusshohlelemente 16, 17 unter Beibehalt des Grundaufbaus auch rotationssymmetrische Ausgestaltungen möglich sind.

Die Verriegelungselemente 6, 9 weisen jeweils ein Überbrückungsteil 58 auf, das bezogen auf Formschlusshohlelemente 16 gemäß Fig. 3 bis 10 jeweils durch einen zentralen Aussteifungskörper 20 gebildet ist, welcher durch Stege oder Stützen gebildet sein kann.

Wird der zentrale Aussteifungskörper 20 durch Stege gebildet, insbesondere durch einen über die Länge des jeweiligen dichtenden Formschlusshohlelementes 16 durchlaufenden Steg, so kann über den Steg eine Aufteilung des Formschlusshohlelementes 16 in zwei Kammern erfolgen, die getrennt mit Druck zu versorgen sind, wobei es im Rahmen der Erfindung liegt, eine getrennte Druckversorgung für die Kammern vorzusehen, analog zur Darstellung gemäß Fig. 2.

Darüber hinaus liegt es im Rahmen der Erfindung, ein langgestrecktes, etwa als Formschlusshohlelement 16 gestaltetes Verriegelungselement 6 mit Schottwänden zu versehen und die einzelnen, über die Schottwände abgetrennten Längenabschnitte getrennt zu versorgen.

Letzteres ist insbesondere auch bei Ausgestaltungen möglich, bei denen die zentrale Aussteifung 20 nicht durch in Längsrichtung durchlaufende Stege, sondern über in Längsrichtung beabstandete Stützen erfolgt.

Darüber hinaus können Verriegelungselemente 6 mit einem Aussteifungskörper 20 in Steg- oder Stützenform sowohl als Einfädelhilfe beim Zusammenfahren der Dachteile 2, 3 bzw. 3, 4 wie auch als Abstützung gegenüber einem Randbereich einer Aufnahme 21 für das Formschlusshohlelement 16 dienen, wobei eine diesbezügliche Aufnahme 21 in Fig. 3 und 4 gezeigt und dem Windlauf 15 zugeordnet ist. Der Aufnahme 21 ist in dieser Ausgestaltung eine Auskleidung 22 zugeordnet, die beispielsweise durch ein im Wesentlichen U-Querschnitt aufweisendes Einsatzteil aus Kunststoff, Gummi oder dergleichen gebildet ist, das gegenüber der Einfädelöffnung hinterschnitten ausgebildet ist, so dass über das Formschlusshohlelement 16 im aufgeblasenen Zustand eine Verriegelung und/oder Abdichtung erreichbar ist.

Das Formschlusshohlelement 16 weist eine druckabhängig aufspreizbare - in Fig. 4 aufgeblasen und nicht aufgeblasen dargestellte - querschnittsveränderliche Hülle 23 auf, die bevorzugt elastisch ist und die sich, in der Aufnahme 21 liegend, entgegen der Einsteckrichtung hintergreifend gegen die eingezogene Randzone 24 der Auskleidung 22 abstützt.

Im Ausführungsbeispiel gemäß Fig. 3 und 4 ist das zentrale formsteife Überbrückungsteil 58 zwischen den zu verbindenden Teilen als stegartiger Aussteifungskörper 20 ausgebildet, der über einen verbreiterten Grundkörper 25 in einer Halterung 26 des vorderen Dachteiles 3 befestigt ist, der bei gegen den Windlauf 15 verriegeltem Dachteil 2 die Aufnahme 21 gegenüberliegt, die im Windlauf 15 als zum vorderen Dachteil 2 angrenzenden Bauteil liegt.

Dargestellt ist die Hülle 23 des Formschlusshohlelementes 16 als ballonartig aufweitbare Ummantelung, die dadurch gebildet ist, dass der als Steg ausgebildete zentrale Aussteifungskörper 20 an seinem dem Grundkörper 25 gegenüberliegenden Ende in flächigen, flexiblen und im Vergleich zum Steg dünnwandigen, quasi lappenartigen Wandteilen ausläuft, die mit 27 bezeichnet sind und die beiderseits des Steges umgelegt und auf den Grundkörper 25 zurückgeführt werden können, derart, dass die frei auslaufenden Endbereiche 28 der in Richtung auf den Grundkörper 25 zurückgebogenen Wandteile 27 flanschartig am Grundkörper 25 anliegen und zusammen mit diesem gegen das Dachteil 2 zu verspannen sind.

Ein derartiger Aufbau des Formschlusshohlelementes 16 macht dieses in einfacher Weise herstellbar sowie auch leicht montierbar, wobei die Druckversorgung in nicht gezeigter Weise über die zentrale Aussteifung 20 erfolgen kann.

Im Rahmen der Erfindung liegt es selbstverständlich auch, ein Formschlusshohlelement mit dem gezeigten Profil zu extrudieren, wobei insbesondere in Verbindung mit einer solchen Gestaltung auch eine Lösung möglich ist, die ausgehend vom Grundkörper 25 einen frei liegenden Bereich des zentralen Abstützungskörpers 20 vorsieht, oberhalb dessen die die Hülle 23 bildenden Wandteile an die zentrale Auskleidung 22 anschließen. Eine solche Ausgestaltung kann insbesondere zweckmäßig sein, wenn der zentrale Aussteifungskörper 20 gleichzeitig das Führungsteil bildet, das in verriegeltem Zustand gegen das angrenzende Bauteil führend abstützt.

Ferner liegt es im Rahmen der Erfindung, den zentralen Aussteifungskörper 20 derart zu verlängern, dass er über die Hülle hinaus ragt und beispielsweise einen sich konusförmig verjüngenden Einfädelteil bildet, der beim Einfädeln gleichzeitig in Einfädelrichtung eine Abschirmung für die dahinter liegende, kontrahierte Hülle 23 bildet.

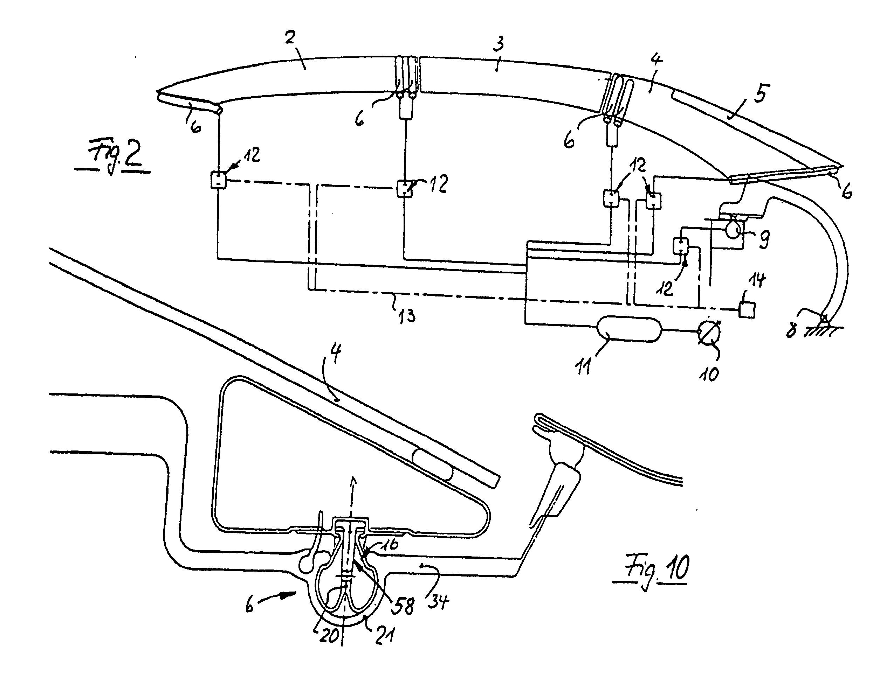

Fig. 5 und 6 veranschaulichen bei entsprechendem Aufbau die Ausgestaltung des Verriegelungselementes 6 zwischen dem vorderen Dachteil 2 und dem mittleren Dachteil 3, wobei in diesem Falle dem mittleren Dachteil 3 die Aufnahme 21 zugeordnet ist, und zwar als Bestandteil eines Randprofiles 29.

Fig. 7 bis 9 veranschaulichen das Zusammenfahren von mittlerem Dachteil 3 und hinterem Dachteil 4, wobei, wie bei den vorhergehenden Ausführungsformen, die Dachteile 3 und 4 sich im Wesentlichen quer zu ihrer Erstreckungsrichtung aufeinander zubewegen und gegeneinander dichtend verriegelt werden, nachdem der Formschlusshohlkörper 16 in die Aufnahme 21 gemäß Fig. 8 eingefahren ist und gemäß Fig. 9 in dieser eingefahrenen Lage durch Aufblähen der Hülle 23 verriegelt ist. Mit der Verriegelung ist auch eine Abdichtung des Übergangs 30 zwischen den Dachteilen 3 und 4 verbunden, wobei der Formschlusshohlkörper 16 seitlich versetzt zum Übergang zwischen mittlerem Dachteil 3 und hinterem Dachteil 4 überdeckt vom hinteren Dachteil 4 liegt, so dass eine gegen Zugriff und Beschädigung weitgehend geschützte Lage gegeben ist, die Überdeckung des Übergangs 30 nach unten aber nicht durch den Formschlusshohlkörper 16 erfolgt, sondern durch den Rahmenteil 29, der am mittleren Dachteil 3 vorgesehen ist und dem die Aufnahme 21 zugeordnet ist.

Fig. 9 veranschaulicht, dass der zentrale Aussteifungskörper 20 als Steg ausgebildet ist, und dass die beiderseits des zentralen Aussteifungskörpers 20 liegenden Kammern 31, 32 gemeinsam innendruckbeaufschlagbar sind, wobei die Kammern 31 und 32 über eine Querverbindung 33 in dem zentralen Aussteifungskörper 20 miteinander in Verbindung stehen. Im Rahmen der Erfindung liegt es aber auch, von einer solchen Querverbindung abzusehen und die Kammern 31 und 32 getrennt zu beaufschlagen.

Fig. 10 zeigt wiederum im Querschnitt das im Übergang zwischen hinterem Dachteil 4 und Hutablage 34 verlaufende, lineare, schlauchförmige Verriegelungselement 6, dessen Formschlusshohlelement 16 in eine Aufnahme 21 eingreift, die hier in der Hutablage 34 oder, in entsprechender Weise, in einem anderen Teil der Karosserie, insbesondere in einem Rohbauteil, angeordnet ist.

In Fig. 1 ist mit 9 ein Verriegelungselement angesprochen, das als punktuell arbeitendes Verriegelungselement keinen langgestreckten, schlauchförmigen Formschlusshohlkörper, sondern einen ballonartigen Formschlusshohlkörper aufweist, für den bei bezüglich der Hülle ballonartigen Ausbildung der zentrale Aussteifungskörper sowohl als Steg wie auch als Stütze, insbesondere aber als Stütze, ausgebildet sein kann. Die Ausbildung als Steg ermöglicht auch hier eine Aufteilung in getrennt versorgbare Kammern.

Fig. 15 und 16 veranschaulichen im Vergleich Ausgestaltungen, bei denen in Fig. 15, wie in den vorausgegangenen Ausführungsbeispielen, die Verbindung zwischen zwei aufeinander folgenden Dachteilen, hier dem vorderen Dachteil 2 und dem mittleren Dachteil 3, über ein Verriegelungselement 6 erfolgt, das sich, wie anhand der Fig. 1 veranschaulicht, schlauchartig über die Breite des Daches erstreckt und in einer entsprechenden Aufnahme 21 sich verkrallend die Verbindung zwischen den Dachteilen 2 und 3 sowie die Abdichtung des Übergangsspaltes bewirkt.

Fig. 16 veranschaulicht demgegenüber eine Ausgestaltung, bei der, entsprechend den Schemadarstellungen in Fig. 1 und 2, zwei aufeinander folgende Dachteile 2 und 3 über parallel verlaufende, schlauchförmige Verriegelungselemente 6 von im Wesentlichen gleicher Ausbildung verbunden sind. Auch hier sind die Verriegelungselemente 6 mit ihren Formschlusshohlkörpern 16 dem einen Dachteil zugeordnet, nämlich dem vorderen Dachteil 2, während die zugehörigen Aufnahmen 21 mit dem mittleren Dachteil 3 verbunden sind, wobei auch in diesem Fall die Aufnahmen 21 wiederum Bestandteil des Randprofiles 29 des mittleren Dachteiles 3 sind.

Während Fig. 16 von parallel verlaufenden, sich schlauchförmig über die Breite des Daches erstreckenden Verriegelungselementen 6 ausgeht, liegt es auch im Rahmen der Erfindung, das eine Verriegelungselement 6, insbesondere das benachbarte zum Übergang 30 zwischen den Dachteilen 2 und 3 liegende Verriegelungselement 6 schlauchförmig auszugestalten, hingegen das beabstandet zum Übergang 30 liegende Verriegelungselement 6 so auszugestalten, dass es sich lediglich über Teilbereiche der Dachbreite erstreckt, bei nach wie vor schlauchförmiger Ausbildung, oder für dieses Verriegelungselement 6 Einzelelemente vorzusehen, die gemäß Fig. 1 als ballonartige Verriegelungselemente 9 ausgebildet sind.

Fig. 11 bis 14 veranschaulichen ein erfindungsgemäßes Dichtungs- und/oder Verriegelungssystem, bei dem die Verriegelungselemente den Übergangsspalt 30 zwischen aufeinander folgenden Dachteilen 2, 3, 4 überbrückend verlaufen, sich also im Wesentlichen in Richtung der Ebene des Daches 1 erstrecken und durch Verfahren der Dachteile 2 und 3 bzw. 3 und 4 gegeneinander in Richtung der Dachebene in ihre Verriegelungs- und/oder Dichtungsposition kommen.

In ihrer Funktion entsprechen die Verriegelungselemente 6 gemäß Fig. 11 bis 14 den anhand der vorgeschilderten Ausführungsbeispiele erläuterten, und es ist im Rahmen der Erfindung grundsätzlich auch möglich, die jeweiligen Verriegelungselemente 6 bei in Erstreckungsrichtung des Daches gegeneinander verfahrbaren Dachteilen gemäß Fig. 11 sowie bei quer zur Erstreckungsrichtung des Daches zur Herstellung der Verriegelung gegeneinander beweglichen Dachteilen gemäß Fig. 3 bis 10 zu verwenden-Außerdem können Verriegelungselemente 6 gemäß Fig. 11 bis 14 ebenfalls sowohl als punktuell wirkende, sozusagen ballonförmige Verriegelungselemente wie auch als linear sich erstreckende, insbesondere schlauchförmige Verriegelungselemente ausgebildet werden.

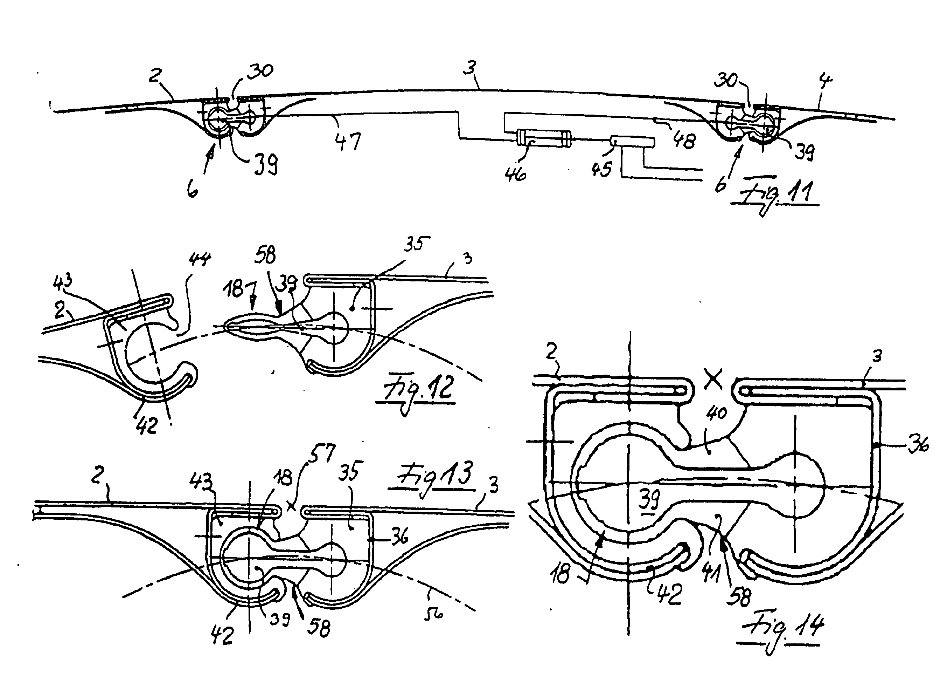

Besonders vorteilhaft und zweckmäßig sind Verriegelungselemente 6 in der Ausgestaltung gemäß Fig. 11 bis 14 bei Anordnungen gemäß Fig. 11, bei denen die Dachteile in Erstreckungsrichtung des Daches unter Herstellung der Verriegelung aufeinander zufahren, wie insbesondere anhand der Fig. 12 und 13 veranschaulicht, wobei wie über die Kurvenbahn 56 sowie bezüglich einer Wölbung in Gegenrichtung über die imaginäre Drehachse 57 angedeutet, die erfindungsgemäße Lösung auch bei gekrümmten Bewegungsbahnen einzusetzen ist.

Auch die Verriegelungselemente 6 gemäß Fig. 11 bis 14 weisen jeweils einen Grundkörper 35 auf, der in einer Halterung des einen der miteinander zu verbindenden Dachteile, zum Beispiel der Dachteile 3 und 4, hier in einer Halterung 36 des Dachteiles 4 formschlüssig verankert ist. An den Grundkörper 35 schließt in Erstreckungsrichtung des Verriegelungselementes 6 gegen sein als Formschlusshohlelement 18 ausgebildetes Ende als Überbrückungsteil 58 ein Übergangsteil 38 an, das einstückig zum Grundkörper 35 und zum Formschlusshohlelement 18 ausgebildet ist, wobei Grundkörper 35, Formschlusshohlelement 18 und Übergangsteil 38 einen hundeknochenartig geformten, sich in Längsrichtung des Verriegelungselementes 6 erstreckenden Hohlraum 39 begrenzen. Der Hohlraum 39 setzt sich vom Innenraum des Formschlusshohlelementes 18, das Übergangsteil 38 durchsetzend, in den Grundkörper 35 fort, so dass das Übergangsteil 38 bezogen auf ein Verriegelungselement 6 des vorstehend geschilderten, aus den Fig. 12 bis 14 ersichtlichen Querschnitts, ausgehend vom Grundkörper 35, zwei einander gegenüberliegende Schenkel 40 und 41 aufweist, die sich in Richtung auf das im Querschnitt schlauchförmige Formschlusshohlelement 18 erstrecken und in dessen Wandung einlaufen.

Fig. 12 zeigt, dass das Formschlusshohlelement 18, solange kein Überdruck ansteht, gegebenenfalls aber auch unter dem Einfluss von Unterdruck, sich als im Querschnitt flaches Oval darstellt, das am frei auslaufenden Ende des Formschlusshohlelementes 18 geschlossen ist und das in Gegenrichtung in Richtung auf den Grundkörper 35 geöffnet ist und mit seiner Wandung in die Schenkel 40 bzw. 41 des Übergangsteiles 38 einläuft, die keilförmig in Richtung auf das Formschlusshohlelement 18 zulaufen. Dadurch ergibt sich eine flachgestreckte, keilförmige Grundform, die beim Zusammenfahren der Dachteile 2, 3 bzw. 3, 4 bei kleinem öffnungsquerschnitt in der Aufnahme 42 ein sicheres Einfädeln gewährleistet, wobei die Aufnahme 42 eine Einlage 43 aufweisen kann, die eine gegenüber ihrer Einfahröffnung 44 hinterschnittene Querschnittsform aufweist.

Da sich der Hohlraum 39 bei dieser Querschnittsform bis in den Grundkörper 35 fortsetzt, ist ungeachtet der im Hinblick auf die druckabhängige Aufweitung des Formschlusshohlelementes 18 eine verhältnismäßige dickwandige Ausgestaltung der Schenkel 40 und 41 des Übergangsteiles möglich, das in Überdeckung zum spaltförmigen Übergang 30 liegt, so dass sich eine sehr widerstandsfähige Verbindung ergibt, die zusätzlich durch entsprechende Beschichtung oder Armierung, was hier nicht weiter dargestellt ist, auch gegen willkürliche Eingriffe gut geschützt ist. Die Schenkel 40 und 41 gehen bevorzugt erst im Bereich der Einführöffnung 44 in den dünnwandigeren Bereich des Formschlusshohlelementes 18 über, so dass bei entsprechendem Innendruck die Schenkel 40 und 41 eine verhältnismäßig stabile Brücke bilden, die auch zur Ausrichtung der jeweils verbundenen Dachteile 2, 3 bzw. 3, 4 in ihrer Höhenlage zueinander, und damit zu einer fluchtenden Ausrichtung beiträgt. Ferner ergibt sich bei Innendruckbeaufschlagung bei dieser Lösung eine Verspannung sowohl des Grundkörpers 35 wie auch des Formschlusshohlelementes 18 gegen die zugehörige Halterung 36 bzw. Aufnahme 42, so dass auch in Erstreckungsrichtung des Daches eine sehr zugfeste Verbindung erreicht wird.

In Fig. 11 ist in Analogie zur Darstellung gemäß Fig. 2 die Druckversorgung veranschaulicht, die hier beispielsweise auf hydraulischer Basis erfolgt, wobei ein Stellzylinder 45 eine Differenzialkolbeneinheit 46 als Druckumsetzer beaufschlagt, die über Verbindungsleitungen 47 und 48 mit den Hohlräumen 39 der jeweiligen Verriegelungselemente 6 in Verbindung steht.

Die vorgeschilderten Ausgestaltungsformen gehen jeweils von einem im Wesentlichen symmetrischen Aufbau der Verriegelungselemente 6 aus, sei es einem punktsymmetrischen Aufbau, bezogen auf eine Stütze als zentralem Aussteifungskörper 20 bei ballonförmigen Verriegelungselementen, sei es einem spiegelsymmetrischen Aufbau bei einem über die Länge des schlauchförmigen Verriegelungselementes durchlaufenden Steg als zentralem das Überbrückungsteil 58 bildendem Aussteifungskörper 20.

Fig. 17 veranschaulicht eine hiervon abweichende Ausgestaltung, die sich durch besondere Einfachheit auszeichnet und bei der das Formschlusshohlelement, hier mit 19 bezeichnet, einerseits durch eine Trag- oder Stützwand 49 gebildet ist, die vom Grundkörper 50 als Überbrückungsteil 58 aufragt und die bevorzugt quer zu ihrer Wandebene eine gewisse Elastizität aufweist. Die Trag- und Stützwand 49 bildet die eine Begrenzungsseite eines Hohlraumes 51, der druckbeaufschlagbar ist und der in Gegenrichtung durch eine flexible Begrenzungswand 52 begrenzt ist, die sich im Bereich zwischen Grundkörper 50 und von diesem abgelegenen Ende der Trag- und Stützwand 49 erstreckt. Die Begrenzungswand 52 ist bevorzugt auf ihre zur Trag- und Stützwand 49 benachbarte Ausgangslage insbesondere elastisch vorgespannt - strichliert angedeutet -, und aus dieser Ausgangslage druckabhängig ausschwenkbar, wobei eine Raststufe 53 ausgeformt wird, die einer hinterschnittenen Fläche einer Aufnahme 55 zugeordnet ist. In entsprechender Weise kann auch die Trag- und stützwand 49 auf ihrer gegenüberliegenden Seite mit einer Raststufe 54 versehen sein, der ebenfalls im Bereich der Aufnahme 55 ein Hinterschnitt zugeordnet sein kann. Ein derartiges Verriegelungselement 6 ist insbesondere bei Anordnungen gemäß Fig. 11 bis 14 zweckmäßig und bietet eine vorteilhafte Möglichkeit, auch innendruckunabhängig den Verriegelungszustand über die Verrastung 54 aufrechtzuerhalten, wobei die Trag- und Stützwand 49 ebenfalls eine sichere und geschützter Überbrückung des Überganges 30 zwischen aufeinander folgenden Dachteilen ermöglicht.

Auch wenn die Erfindung vorstehend lediglich in Bezug auf Dachteile als Abdeckelemente und Abdeckungen erläutert ist, kann sie mit Vorteil auch bei sonstigen Abdeckungen, Türen oder dergleichen, eingesetzt werden.

Insgesamt wird durch die Erfindung ein Dichtungs- und/oder Verriegelungssystem für Fahrzeuge mit einer aufbauseitigen Fahrzeugöffnung geschaffen, das als druckabhängig arbeitendes System ausgestaltet ist, wobei gegeneinander abzudichtende und/oder zu verriegelnde Fahrzeugelemente über Verriegelungselemente verbunden werden, die Formschlusshohlelemente und eine aussteifende Überbrückung für den Übergangsbereich zwischen zu verbindenden Fahrzeugteilen aufweisen. Gegenstand der Erfindung sind auch die im System verwendeten Verriegelungselemente als solche, insbesondere in den in den Ausführungsbeispielen gezeigten und in Verbindung mit den Ausführungsbeispielen angesprochenen Ausgestaltungsformen.

## Patentansprüche

1. Dichtungs- und/oder Verriegelungssystem für Fahrzeuge mit einer aufbauseitigen Fahrzeugöffnung, insbesondere einer Dach- oder Türöffnung, und einer dieser zugeordneten Abdeckung (2,3,4), die in ihrer Abdecklage zur Fahrzeugöffnung gegen ein angrenzendes Bauteil über ein innendruckabhängig querschnittsveränderliches, flexibles und in eine Aufnahme dieses Bauteils eingreifendes Formschlusshohlelement (16,18,19) festzulegen ist, das über einen in einer Halterung (26) aufgenommenen Grundkörper (25) getragen ist,
**dadurch gekennzeichnet,**
**dass** vom Grundkörper (25; 35) in Richtung auf die Aufnahme (21; 42; 55) ein formsteifes Überbrückungsteil (58) auskragt, das mit dem Formschlusshohlelement (16; 18; 19) verbunden ist.

2. Dichtungs- und/oder Verriegelungssystem nach Anspruch 1,
**dadurch gekennzeichnet,**
**dass** das Überbrückungsteil (58) vom Grundkörper (25; 35) ausgehend sich verjüngt.

3. Dichtungs- und/oder Verriegelungssystem nach Anspruch 1 oder 2,
**dadurch gekennzeichnet,**
**dass** das Überbrückungsteil (58) als als Stütze gestalteter Aussteifungskörper (20) ausgebildet ist.

4. Dichtungs- und/oder Verriegelungssystem nach Anspruch 1 oder 2,
**dadurch gekennzeichnet,**
**dass** das Überbrückungsteil (58) als stegförmiger Aussteifungskörper (20) ausgebildet ist.

5. Dichtungs- und/oder Verriegelungssystem nach Anspruch 4,
**dadurch gekennzeichnet,**
**dass** das Überbrückungsteil (58) eine seitliche Begrenzung des Formschlusshohlelementes (18; 19) bildet.

6. Dichtungs- und/oder Verriegelungssystem nach Anspruch 3 oder 4,
**dadurch gekennzeichnet,**
**dass** das Überbrückungsteil (58) sich zwischen einander gegenüberliegenden, durch Druckbeaufschlagung ausformbaren Teilen des Formschlusshohlelementes (16) erstreckt.

7. Dichtungs- und/oder Verriegelungssystem nach einem der Ansprüche 2 bis 6,
**dadurch gekennzeichnet,**
**dass** das Formschlusshohlelement (16) als den Aussteifungskörper (20) zumindest teilweise umschließender Ringkörper ausgebildet ist.

8. Dichtungs- und/oder Verriegelungssystem nach einem der Ansprüche 1 bis 6,
**dadurch gekennzeichnet,**
**dass** das Formschlusshohlelement (16) längs des stegartigen, das Überbrückungsteil (58) bildenden Aussteifungskörper (20) verlaufend angeordnet ist.

9. Dichtungs- und/oder Verriegelungssystem nach Anspruch 3,
**dadurch gekennzeichnet,**
**dass** das Formschlusshohlelement (16) den das Überbrückungsteil (58) bildenden Aussteifungskörper (20) innendruckbeaufschlagt im Wesentlichen ballonartig umschließt.

10. Dichtungs- und/oder Verriegelungssystem nach Anspruch 4,
**dadurch gekennzeichnet,**
**dass** das Formschlusshohlelement (16) längs des stegförmigen Aussteifungskörpers (20) im Wesentlichen schlauchförmig verläuft.

11. Dichtungs- und/oder Verriegelungssystem nach Anspruch 9 oder 10,
**dadurch gekennzeichnet,**
**dass** das Formschlusshohlelement (16) mit dem Grundkörper (25) und dem von Grundkörper (25) abgelegene Bereich des Aussteifungskörpers (20) verbunden ist.

12. Dichtungs- und/oder Verriegelungssystem nach einem der vorhergehenden Ansprüche,
**dadurch gekennzeichnet,**
**dass** das Überbrückungsteil (58) ein Übergangsteil (38) zwischen dem Grundkörper (35) und dem Formschlusshohlelement (18) bildet.

13. Dichtungs- und/oder Verriegelungssystem nach Anspruch 12,
**dadurch gekennzeichnet,**
**dass** das Formschlusshohlelement (18) endseitig an das Übergangsteil (38) anschließt.

14. Dichtungs- und/oder Verriegelungssystem nach Anspruch 12 oder 13,
**dadurch gekennzeichnet,**
**dass** der als Steg ausgebildete Aussteifungskörper(20) in Längsrichtung des Steges verlaufend geschlitzt ausgebildet ist.

15. Dichtungs- und/oder Verriegelungssystem nach einem der vorhergehenden Ansprüche,
**dadurch gekennzeichnet,**
**dass** das Überbrückungsteil (58) biegsam formsteif ausgebildet ist.

16. Dichtungs- und/oder Verriegelungssystem nach einem der vorhergehenden Ansprüche,
**dadurch gekennzeichnet,**
**dass** die Aufnahme (21; 42; 55) für das Formschlusshohlelement (16; 18; 19) als Einsatzstück ausgebildet ist.

17. Dichtungs- und/oder Verriegelungssystem nach einem der vorhergehenden Ansprüche,
**dadurch gekennzeichnet,**
**dass** die Aufnahme (21; 42; 55) für das Formschlusshohlelement (16; 18; 19) hinterschnitten ausgebildet ist.

18. Dichtungs- und/oder Verriegelungssystem nach einem der vorhergehenden Ansprüche,
**dadurch gekennzeichnet,**
**dass** die Abdeckung durch ein Dachteil (2; 3; 4) gebildet ist.

19. Dichtungs- und/oder Verriegelungssystem nach Anspruch 18,
**dadurch gekennzeichnet,**
**dass** das an das Dachteil (2) angrenzende Bauteil durch den Windlauf (15) der Fahrzeugkarosserie gebildet ist.

20. Dichtungs- und/oder Verriegelungssystem nach Anspruch 18 oder 19,
**dadurch gekennzeichnet,**
**dass** das an das Dachteil (4) angrenzende Bauteil durch ein heckseitiges Karosserieteil gebildet ist.

21. Dichtungs- und/oder Verriegelungssystem nach Anspruch 18,
**dadurch gekennzeichnet,**
**dass** ein an ein Dachteil (z. B. 2) angrenzendes Bauteil durch ein weiteres Dachteil (z. B. 3) gebildet ist.

22. Dichtungs- und/oder Verriegelungssystem nach einem der vorhergehenden Ansprüche,
**dadurch gekennzeichnet,**
**dass** das Formschlusshohlelement (16; 18; 19) mit Überdruck beaufschlagbar ist.

23. Dichtungs- und/oder Verriegelungssystem nach einem der vorhergehenden Ansprüche,
**dadurch gekennzeichnet,**
**dass** das Formschlusshohlelement (16; 18; 19) mit Unterdruck beaufschlagbar ist.

24. Dichtungs- und/oder Verriegelungssystem nach einem der vorhergehenden Ansprüche,
**dadurch gekennzeichnet,**
**dass** das Überbrückungsteil (58) bezogen auf die Aufnahme als Einfädelhilfe ausgebildet ist.

25. Dichtungs- und/oder Verriegelungssystem nach Anspruch 23,
**dadurch gekennzeichnet,**
**dass** das Überbrückungsteil (58) über das Formschlusshohlelement hinausragend als Einfädelhilfe ausgebildet ist.

26. Dichtungs- und/oder Verriegelungssystem nach einem der vorhergehenden Ansprüche,
**dadurch gekennzeichnet,**
**dass** das Überbrückungsteil (58) ein Verriegelungsglied bildet, das elastisch auf eine zur Aufnahme hintergreifende Stellung belastet ist.

## Claims

1. Sealing and/or locking system for vehicles with a vehicle opening on the body structure, in particular a roof or door opening, and a cover (2,3,4) allocated thereto, which in its covering position must be fixed to the vehicle opening against an adjoining component via a positive-engagement hollow profile (16,18,19) that is capable of varying its cross section depending on the internal pressure, is flexible and engages in a receiving means in this component, which is carried by a basic structure (25) accommodated in a holding means (26), **characterized in that** a dimensionally stable bridging part (58) projects from the basic structure (25; 35) in the direction of the receiving means (21; 42; 55), which bridging part is connected to the positive-engagement hollow element (16; 18; 19).

2. Sealing and/or locking system according to Claim 1, **characterized in that** the bridging part (58) narrows starting from the basic structure (25; 35).

3. Sealing and/or locking system according to Claim 1 or 2, **characterized in that** the bridging part (58) is executed as a stiffening structure (20) formed as a support.

4. Sealing and/or locking system according to Claim 1 or 2, **characterized in that** the bridging part (58) is executed as a stay-like stiffening structure (20).

5. Sealing and/or locking system according to Claim 4, **characterized in that** the bridging part (58) forms a lateral definition of the positive-engagement hollow element (18; 19).

6. Sealing and/or locking system according to Claim 3 or 4, **characterized in that** the bridging part (58) extends between mutually opposing parts of the positive-engagement hollow element (16) that are capable of being varied in their form by being subjected to pressure.

7. Sealing and/or locking system according to one of Claims 2 to 6, **characterized in that** the positive-engagement hollow element (16) is executed as the stiffening structure (20) for at least partially annular surrounding structures.

8. Sealing and/or locking system according to one of Claims 1 to 6, **characterized in that** the positive-engagement hollow element (16) is so arranged as to be oriented along the stay-like stiffening structure (20) forming the bridging part (58).

9. Sealing and/or locking system according to Claim 3, **characterized in that** the positive-engagement hollow element (16) encloses the stiffening structure (20) forming the bridging part (58) essentially in the form of a balloon.

10. Sealing and/or locking system according to Claim 4, **characterized in that** the positive-engagement hollow element (16) is oriented along the stay-shaped stiffening structure (20) essentially in the form of a hose.

11. Sealing and/or locking system according to Claim 9 or 10, **characterized in that** the positive-engagement hollow element (16) is connected to the basic structure (25) and to the area of the stiffening structure (20) that is remote from the basic structure (25).

12. Sealing and/or locking system according to one of the preceding claims, **characterized in that** the bridging part (58) forms a transitional part (38) between the basic structure (35) and the positive-engagement hollow element (18).

13. Sealing and/or locking system according to Claim 12, **characterized in that** the positive-engagement hollow element (18) is attached to the end of the transitional part (38).

14. Sealing and/or locking system according to Claim 12 or 13, **characterized in that** the stiffening structure (20) executed as a stay is executed with a slot oriented in the longitudinal direction of the stay.

15. Sealing and/or locking system according to one of the preceding claims, **characterized in that** the bridging part (58) is executed in an elastically dimensionally stable fashion.

16. Sealing and/or locking system according to one of the preceding claims, **characterized in that** the receiving means (21; 42; 55) for the positive-engagement hollow element (16; 18; 19) is executed as an insert piece.

17. Sealing and/or locking system according to one of the preceding claims, **characterized in that** the receiving means (21; 42; 55) for the positive-engagement hollow element (16; 18; 19) is executed with an undercut form.

18. Sealing and/or locking system according to one of the preceding claims, **characterized in that** the cover is formed by a roof part (2; 3; 4).

19. Sealing and/or locking system according to Claim 18, **characterized in that** the component adjoining the roof part (2) is formed by the windscreen cowl top panel (15) of the vehicle body.

20. Sealing and/or locking system according to Claim 18 or 19, **characterized in that** the component adjoining the roof part (4) is formed by a part of the rear bodywork of the vehicle.

21. Sealing and/or locking system according to Claim 18, **characterized in that** a component adjoining a roof part (e.g. 2) is formed by a further roof part (e.g. 3).

22. Sealing and/or locking system according to one of the preceding claims, **characterized in that** the positive-engagement hollow element (16; 18; 19) is capable of being subjected to a positive pressure.

23. Sealing and/or locking system according to one of the preceding claims, **characterized in that** the positive-engagement hollow element (16; 18; 19) is capable of being subjected to a partial vacuum.

24. Sealing and/or locking system according to one of the preceding claims, **characterized in that** the bridging part (58) is executed as an aid to passage in relation to the receiving means.

25. Sealing and/or locking system according to Claim 23, **characterized in that** the bridging part (58) is executed as an aid to passage so as to project beyond the positive-engagement hollow element.

26. Sealing and/or locking system according to one of the preceding claims, **characterized in that** the bridging part (58) forms a locking element, which is loaded elastically causing it to adopt a position behind the receiving means.

## Revendications

1. Système d'étanchéité et/ou de verrouillage pour des véhicules avec une ouverture du véhicule vers l'extérieur, en particulier une ouverture de toit ou de porte, et un recouvrement (2, 3, 4) associé à celle-ci, qui dans sa position de couverture pour l'ouverture de véhicule doit être fixé contre un composant adjacent par un élément creux à emboîtement (16, 18, 19) flexible, de section variable en fonction de la pression et s'engageant dans un logement de ce composant, qui est porté par un corps de base (25) logé dans un support (26), **caractérisé en ce qu'**une pièce de jonction (58) de forme rigide sort du corps de base (25; 35) en direction du logement (21; 42; 55), et est assemblée à l'élément creux à emboîtement (16; 18; 19).

2. Système d'étanchéité et/ou de verrouillage selon la revendication 1, **caractérisé en ce que** la pièce de jonction (58) s'amincit à partir du corps de base (25; 35).

3. Système d'étanchéité et/ou de verrouillage selon la revendication 1 ou 2, **caractérisé en ce que** la pièce de jonction (58) est réalisé sous la forme d'un corps de renforcement (20) constitué comme un support.

4. Système d'étanchéité et/ou de verrouillage selon la revendication 1 ou 2, **caractérisé en ce que** la pièce de jonction (58) est réalisée sous la forme d'un corps de renforcement (20) en forme de nervure.

5. Système d'étanchéité et/ou de verrouillage selon la revendication 4, **caractérisé en ce que** la pièce de jonction (58) forme une limitation latérale de l'élément creux à emboîtement (18; 19).

6. Système d'étanchéité et/ou de verrouillage selon la revendication 3 ou 4, **caractérisé en ce que** la pièce de jonction (58) s'étend entre des parties de l'élément creux à emboîtement (16) opposées l'une à l'autre et déformables par application d'une pression.

7. Système d'étanchéité et/ou de verrouillage selon l'une quelconque des revendications 2 à 6, **caractérisé en ce que** l'élément creux à emboîtement (16) est réalisé sous la forme d'un corps annulaire entourant au moins partiellement le corps de renforcement (20).

8. Système d'étanchéité et/ou de verrouillage selon l'une quelconque des revendications 1 à 6, **caractérisé en ce que** l'élément creux à emboîtement (16) est disposé le long du corps de renforcement (20) formant la pièce de jonction en forme de nervure (58).

9. Système d'étanchéité et/ou de verrouillage selon la revendication 3, **caractérisé en ce que** l'élément creux à emboîtement (16) entoure le corps de renforcement (20) formant la pièce de jonction (58), essentiellement sous forme de ballon par l'action d'une pression interne.

10. Système d'étanchéité et/ou de verrouillage selon la revendication 4, **caractérisé en ce que** l'élément creux à emboîtement (16) est disposé sensiblement sous la forme d'un tuyau souple le long du corps de renforcement en forme de nervure (20).

11. Système d'étanchéité et/ou de verrouillage selon la revendication 9 ou 10, **caractérisé en ce que** l'élément creux à emboîtement (16) est assemblé au corps de base (25) et à la région du corps de renforcement (20) éloignée du corps de base (25).

12. Système d'étanchéité et/ou de verrouillage selon l'une quelconque des revendications précédentes, **caractérisé en ce que** la pièce de jonction (58) forme une pièce de transition (38) entre le corps de base (35) et l'élément creux à emboîtement (18).

13. Système d'étanchéité et/ou de verrouillage selon la revendication 12, **caractérisé en ce que** l'élément creux à emboîtement (18) se raccorde par son extrémité à la pièce de transition (38).

14. Système d'étanchéité et/ou de verrouillage selon la revendication 12 ou 13, **caractérisé en ce que** le corps de renforcement en forme de nervure (20) est réalisé avec une fente dans la direction longitudinale de la nervure.

15. Système d'étanchéité et/ou de verrouillage selon l'une quelconque des revendications précédentes, **caractérisé en ce que** la pièce de jonction (58) est de forme rigide flexible.

16. Système d'étanchéité et/ou de verrouillage selon l'une quelconque des revendications précédentes, **caractérisé en ce que** le logement (21; 42; 55) pour l'élément creux à emboîtement (16; 18; 19) est une pièce rapportée.

17. Système d'étanchéité et/ou de verrouillage selon l'une quelconque des revendications précédentes, **caractérisé en ce que** le logement (21; 42; 55) pour l'élément creux à emboîtement (16; 18; 19) est formé en contre-dépouille.

18. Système d'étanchéité et/ou de verrouillage selon l'une quelconque des revendications précédentes, **caractérisé en ce que** le recouvrement est formé par une partie de toit (2; 3; 4).

19. Système d'étanchéité et/ou de verrouillage selon la revendication 18, **caractérisé en ce que** le composant adjacent à la partie de toit (2) est formé par l'auvent (15) de la carrosserie du véhicule.

20. Système d'étanchéité et/ou de verrouillage selon la revendication 18 ou 19, **caractérisé en ce que** le composant adjacent à la partie de toit (4) est formé par la partie de carrosserie du côté de la lunette arrière.

21. Système d'étanchéité et/ou de verrouillage selon la revendication 18, **caractérisé en ce qu'**un composant adjacent à une partie de toit (par exemple 2) est formé par une autre partie de toit (par exemple 3).

22. Système d'étanchéité et/ou de verrouillage selon l'une quelconque des revendications précédentes, **caractérisé en ce que** l'élément creux à emboîtement (16; 18; 19) peut être soumis à une surpression.

23. Système d'étanchéité et/ou de verrouillage selon l'une quelconque des revendications précédentes, **caractérisé en ce que** l'élément creux à emboîtement (16; 18; 19) peut être soumis à une dépression.

24. Système d'étanchéité et/ou de verrouillage selon l'une quelconque des revendications précédentes, **caractérisé en ce que** la pièce de jonction (58) est réalisée comme une aide à l'insertion par rapport au logement.

25. Système d'étanchéité et/ou de verrouillage selon la revendication 23, **caractérisé en ce que** la pièce de jonction (58) est réalisée comme une aide à l'insertion s'étendant au-delà de l'élément creux à emboîtement.

26. Système d'étanchéité et/ou de verrouillage selon l'une quelconque des revendications précédentes, **caractérisé en ce que** la pièce de jonction (58) forme un organe de verrouillage, qui est chargé élastiquement sur une position s'accrochant par l'arrière sur le logement.
